# EUROPÄISCHE PATENTSCHRIFT

(11) **EP 1 703 689 B1**
(45) Veröffentlichungstag und Bekanntmachung des Hinweises auf die Patenterteilung: **17.09.2008**
(21) Anmeldenummer: 05006013.6
(22) Anmeldetag: 18.03.2005
(51) Int. Cl.: H04L 29/06, B60R 16/02

(54) **Lokales Netzwerk für Fahrzeuge**
A local area network for vehicles
Réseau local pour véhicules

(43) Veröffentlichungstag der Anmeldung: 20.09.2006
(73) Patentinhaber: Delphi Technologies, Inc., Troy, MI 48007 (US)
(72) Erfinder: Larisch, Markus, 46514 Schermbeck (DE); Bego-Ghina, Rainer, 44791 Bochum (DE); Krause, Harald, 45525 Hattlingen (DE)
(74) Vertreter: Denton, Michael John

(56) Entgegenhaltungen:
- EP-A- 1 309 132
- DE-A1- 10 254 285
- US-A- 6 145 082
- US-B1- 6 314 351

## Beschreibung

Die Erfindung betrifft ein lokales Netzwerk insbesondere für Fahrzeuge, mit wenigstens einem Master und mehreren Slaves, die durch den Master über einen Datenbus ansteuerbar sind, wobei zumindest ein Slave in einem geschützten Bereich, z.B. innerhalb des Fahrzeugs, und zumindest ein Slave in einem ungeschützten Bereich, z.B. außen am Fahrzeug, angeordnet ist.

Insbesondere in Fahrzeugen werden zunehmend so genannte LIN(Local Interconnect Network)-Datenbusse eingesetzt, die jeweils zwischen einer Zentraleinheit (Master) und mehreren Steuereinheiten (Slaves) vorgesehen sind und beispielsweise der Übertragung von Befehlen zur Betätigung einer Zentralverriegelung des Fahrzeugs, von Fensterhebern usw. dienen. Dabei ist ein jeweiliger Befehl auf dem gesamten Datenbus verfügbar. Bei dem Datenbus handelt es sich nun aber um eine elektrische Leitung, die vor Manipulationen von außen geschützt werden muss. So stellt insbesondere das Herausführen eines Datenbusses aus einem Fahrzeug (beispielsweise zu einem Außenspiegel) ein Sicherheitsrisiko dar. Von einem solchen ungeschützten, von außen zugänglichen Bereich des Datenbusses aus können nämlich nicht autorisierte Befehle eingebracht werden, die beispielsweise ein Öffnen der Zentralverriegelung oder eine Betätigung der Fensterheber bewirken. Um dies zu verhindern und einen entsprechenden Diebstahl- und Einbruchschutz zu gewährleisten, könnte nun zwar jeweils eine gesonderte Datenleitung vom Master zu einem jeweiligen manipulationsgefährdeten Slave geführt werden. Eine solche zusätzliche Datenleitung am Mastermodul bringt jedoch einen relativ hohen Hardware- und Software-Aufwand mit sich. So müsste in einem solchen Fall jeder LIN-Transceiver an eine serielle Schnittstelle am Master bzw. einem diesem zugeordneten Mikrocontroller angeschlossen und die entsprechende Software abgearbeitet werden, was zusätzliche Rechenleistung für den Mikrocontroller erfordern würde.

In der DE 102 54 285 A1 ist eine modulare logische Software-Gateway für das Routing von Nachrichten zwischen zwei Subnetzen beschrieben, wobei die Routing-Entscheidungen über abgespeicherte Routing-Tabellen erfolgen.

Der Erfindung liegt die Aufgabe zugrunde, ein verbessertes Netzwerk der eingangs genannten Art zu schaffen, bei dem der Datenbus bei möglichst geringem Aufwand und damit entsprechend kostengünstig gegen vom nicht geschützten Bereich ausgehende Manipulationen zuverlässig geschützt ist.

Diese Aufgabe wird erfindungsgemäß dadurch gelöst, dass der Master über zwei Transceiver derart mit den Slaves gekoppelt ist, dass von einem jeweiligen Slave im ungeschützten Bereich ausgehende Daten zwar zum Master, jedoch nicht zu irgend einem Slave im geschützten Bereich übertragbar sind, wobei ein Datenausgang des Masters mit einem Dateneingang des einen, direkt mit dem bzw. den Slaves im geschützten Bereich gekoppelten Transceivers, ein Datenausgang dieses Transceivers mit einem Dateneingang des anderen, direkt mit dem bzw. den Slaves im ungeschützten Bereich gekoppelten Transceivers und ein Datenausgang dieses Transceivers mit einem Dateneingang des Masters verbunden ist, der direkt mit dem bzw. den Slaves im geschützten Bereich gekoppelte Transceiver die an seinem betreffenden Dateneingang empfangenen, vom Master ausgesendeten Daten an den bzw. die Slaves im geschützten Bereich weitergibt, über den betreffenden Datenausgang dieses Transceivers sowohl die vom Master ausgesendeten Daten als auch die Antwortsignale des bzw. der im geschützten Bereich angeordneten Slaves an den betreffenden Dateneingang des anderen, direkt mit dem bzw. den Slaves im ungeschützten Bereich gekoppelten Transceivers übertragbar sind, der diese Daten an den bzw. die Slaves im ungeschützten Bereich weitergibt, und über den betreffenden Datenausgang dieses Transceivers die Antwortsignale sämtlicher Slaves an den betreffenden Dateneingang des Masters übertragbar sind.

Aufgrund dieser Ausbildung ist auf einfache Art und Weise ausgeschlossen, dass von einem jeweiligen Slave im ungeschützten Bereich ausgehende Daten zu irgendeinem Slave im geschützten Bereich übertragen werden. Vom nicht geschützten Bereich ausgehende Manipulationen werden damit auf einfache und zuverlässige Weise unterbunden.

Bevorzugt ist der Master über die beiden Transceiver derart mit den Slaves gekoppelt, dass unabhängig davon, ob ein jeweiliger Slave im geschützten oder im ungeschützten Bereich angeordnet ist, zwischen dem Slave und dem Master jeweils ein bidirektionaler Datenverkehr möglich ist.

Bei einer bevorzugten praktischen Ausführungsform des erfindungsgemä-βen lokalen Netzwerks ist einer der beiden Transceiver direkt mit dem bzw. den Slaves im geschützten Bereich und der andere Transceiver direkt mit dem bzw. den Slaves im ungeschützten Bereich gekoppelt.

Dabei sind die beiden Transceiver untereinander zweckmäßigerweise so verbunden, dass von einem jeweiligen Slave im geschützten Bereich ausgehende Daten zu irgendeinem Slave im ungeschützten Bereich übertragbar sind, während ein Datenfluss ausgehend von einem jeweiligen Slave im ungeschützten Bereich zu irgendeinem Slave im geschützten Bereich ausgeschlossen ist.

Vorteilhafterweise sind die beiden Transceiver über nur eine serielle Schnittstelle mit dem Master verbunden. Dabei kann der Master wenigstens einen Mikrocontroller umfassen und diese reelle Schnittstelle dem Mikrocontroller zugeordnet sein.

Der Datenbus kann insbesondere ein Eindraht-Busssystem umfassen.

Bei einer bevorzugten praktischen Ausführungsform des erfindungsgemäßen lokalen Netzwerks ist als Datenbus ein LIN(Local Interconnect Net-work)-Datenbus vorgesehen.

Dabei sind die beiden Transceiver zweckmäßigerweise als LIN-Transceiver ausgeführt.

Durch eine einfache elektronische Schaltung wird also sichergestellt, dass von einem jeweiligen Slave im ungeschützten Bereich ausgehende Daten über den Datenbus zwar zum Master, jedoch nicht zu irgendeinem Slave im geschützten Bereich übertragbar sind. Die beiden LIN-Transceiver erfordern nur eine serielle Schnittstelle am Mikrocontroller, wodurch zusätzlicher Hardware- und Softwareaufwand vermieden wird. Der Master sendet seine Daten an einen ersten der beiden Transceiver, der diese wiederum an die Slaves im geschützten Bereich weitergibt. Sowohl die Signale vom Master als auch die Antwortsignale der Slaves im geschützten Bereich stehen an einem Datenausgang des ersten Transceivers zur Verfügung und gelangen über diesen zum zweiten Transceiver. So bekommen auch die Slaves im ungeschützten Bereich sämtliche Daten. Die Antwortsignale sämtlicher Slaves stehen an einem Datenausgang des zweiten Transceivers an. Somit ist eine vollständige Kommunikation möglich. Wird infolge einer Manipulation an den Slaves im ungeschützten Bereich eine Nachricht von außen in das Netzwerk eingespeist, so ist sichergestellt, dass diese Nachricht nicht zu den Slaves im geschützten Bereich gelangt. Diese sind somit vor nicht autorisierten Nachtrichten geschützt.

Die Erfindung wird im folgenden anhand eines Ausführungsbeispiels unter Bezugnahme auf die Zeichnung näher erläutert.

In der Zeichnung zeigt die einzige Figur ein Funktionsdiagramm einer beispielhaften Ausführungsform des erfindungsgemäßen lokalen Netzwerks, wobei es sich im vorliegenden Fall beispielsweise um ein lokales Netzwerk für Fahrzeuge handelt.

Dieses umfasst wenigstens einen Master 10 und mehrere Slaves Aᵢ, Bi. Die Slaves Aᵢ, Bᵢ sind durch den Master 10 über einen Datenbus 12 ansteuerbar, der im vorliegenden Fall beispielsweise als LIN(Local Interconnect Network)-Datenbus.ausgeführt ist.

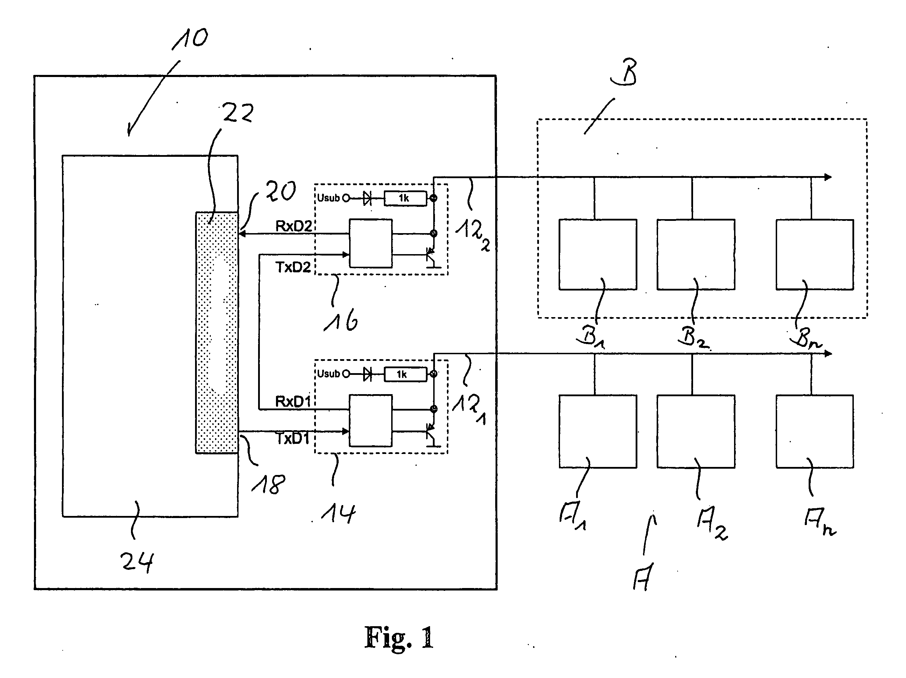

Wie anhand der Figur 1, d.h. der einzigen Figur zu erkennen ist, ist zumindest ein Slave Aᵢ in einem geschützten Bereich A, hier beispielsweise innerhalb des Fahrzeugs und zumindest ein Slave Bᵢ in einem ungeschützten Bereich B, hier beispielsweise außen am Fahrzeug, vorgesehen.

Als in dem geschützten Bereich A angeordneten Slaves Aᵢ sind in der Figur 1 beispielsweise ein Slave A₁ für die Zentralverriegelung, ein Slave A₂ für die Fensterheber und ein Slave Aₙ z.B. für die Türschalter angedeutet. Grundsätzlich können auch weitere und/oder andere im geschützten Bereich A angeordnete Slaves Aᵢ vorgesehen sein.

Als im ungeschützten Bereich B angeordnete Slaves Bᵢ sind in der Figur 1 beispielsweise ein Slave B₁ für den einen und ein Slave B₂ für den anderen Außenspiegel angedeutet, wobei in diesem ungeschützten Bereich B beispielsweise auch wenigstens ein weiterer Slave Bₙ vorgesehen sein kann.

Wie anhand der Figur 1 zu erkennen ist, ist der Master 10 über zwei Transceiver 14, 16, die im vorliegenden Fall als LIN(Local Interconnect Network)-Transceiver ausgeführt sind, derart mit den Slaves Aᵢ, Bᵢ gekoppelt, dass von einem jeweiligen Slave Bᵢ im ungeschützten Bereich B ausgehende Daten zwar zum Master 10, jedoch nicht zu irgendeinem Slave Aᵢ im geschützten Bereich A übertragen werden können.

Dabei ist der Master 10 über die beiden Transceiver 14, 16 überdies derart mit den Slaves Aᵢ, Bᵢ gekoppelt, dass unabhängig davon, ob ein jeweiliger Slave Aᵢ, Bᵢ im geschützten oder im ungeschützten Bereich A bzw. B angeordnet ist, zwischen den Slaves Aᵢ, Bᵢ und dem Master 10 jeweils ein bidirektionaler Datenverkehr möglich ist.

Während der erste Transceiver 14 über einem Abschnitt 12₁ des LIN-Datenbusses 12 mit den Slaves Aᵢ im geschützten Bereich A gekoppelt ist, ist der andere Transceiver 16 über einen Abschnitt 12₂ des LIN-Datenbusses 12 mit den Slaves Bᵢ im ungeschützten Bereich B gekoppelt.

Untereinander sind die beiden Transceiver 14, 16 so verbunden, dass von einem jeweiligen Slave Aᵢ im geschützten Bereich A ausgehende Daten zu den Slaves Bᵢ im ungeschützten Bereich B übertragen werden können, während ein Datenfluss ausgehend von einem jeweiligen Slave Bᵢ im ungeschützten Bereich B zu irgendeinem Slave Aᵢ im geschützten Bereich A ausgeschlossen ist.

Wie anhand der Figur 1 zu erkennen ist, ist im vorliegenden Fall ein Datenausgang 18 des Masters mit einem Dateneingang TxD 1 des ersten, direkt mit den Slaves Aᵢ im geschützten Bereich A gekoppelten Transceivers 14 verbunden. Zudem ist ein Datenausgang RxD 1 dieses ersten Transceivers 14 mit einem Dateneingang TxD2 des zweiten, direkt mit den Slaves Bi im ungeschützten Bereich B gekoppelten Transceivers 16 verbunden. Ein Datenausgang RxD2 dieses zweiten Transceivers 16 ist wiederum mit einem Dateneingang 20 des Masters 10 verbunden.

Dabei gibt der erste, direkt mit den Slaves Aᵢ im geschützten Bereich A gekoppelte Transceiver 14 die an seinem Dateneingang TxD 1 empfangenen, vom Master 10 ausgesendeten Daten an die Slaves Aᵢ im geschützten Bereich A weiter. Über den Datenausgang RxD 1 dieses ersten Transceivers 14 werden dann sowohl die vom Master 10 ausgesendeten Daten als auch die Antwortsignale der im geschützten Bereich A angeordneten Slaves Aᵢ an den Dateneingang TxD2 des zweiten, direkt mit den Slaves Bi im ungeschützten Bereich B gekoppelten Transceivers 16 übertragen. Diese Daten werden an die Slaves Bᵢ im geschützten Bereich B weitergegeben. Schließlich werden über den Ausgang RxD2 dieses zweiten Transceivers 16 die Antwortsignale sämtlicher Slaves Aᵢ, Bᵢ an den Dateneingang 20 des Masters 10 übertragen.

Wie anhand der Figur 1 zu erkennen ist, sind die beiden Transceiver 14, 16 über nur eine serielle Schnittstelle 22 mit dem Master 10 verbunden, die im vorliegenden Fall einem Mikrocontroller 24 des Masters 10 zugeordnet ist.

Der Datenbus 12 kann ein Eindraht-Bussystem umfassen und, wie bereits erwähnt, insbesondere als LIN(Local Interconnect Network)-Datenbus ausgeführt sein. Entsprechend sind dann auch die beiden Transceiver 14, 16 als LIN-Transceiver vorgesehen.

Mit einer einfachen elektronischen Schaltung wird somit erreicht, dass von einem jeweiligen Slave Bᵢ im ungeschützten Bereich B ausgehende Daten über den Datenbus 12 zwar zum Master 10, jedoch nicht zu irgendeinem Slave Aᵢ im geschützten Bereich A übertragen werden können. Die beiden LIN-Transceiver 14, 16 erfordern nur eine serielle Schnittstelle 22 am Mikrocontroller 24, so dass kein zusätzlicher Hardware- und Softwareaufwand entsteht. Der Master 10 sendet seine Daten an den ersten Transceiver 14, der diese wiederum an die Slaves Aᵢ im geschützten Bereich A weitergibt. Am Datenausgang RxD 1 des ersten Transceivers 14 stehen sowohl die Signale vom Master 10 als auch die Signale der Slaves Aᵢ an. Über diesen Datenausgang RxD 1 gelangen sie dann zum Dateneingang TxD2 des zweiten Transceivers 16, über den sie an die Slaves B₁ im ungeschützten Bereich B weitergegeben werden. Somit erhalten auch die Slaves Bᵢ alle Daten. Die Antworten sämtlicher Slaves Aᵢ, Bᵢ stehen dann am Datenausgang RxD2 des zweiten Transceivers 16 an. Über diesen Datenausgang gelangen sie dann zum Dateneingang 20 des Masters 10. Es ist somit eine vollständige Kommunikation ausschließlich eines Datenflusses von einem jeweiligen Slave Bᵢ im ungeschützten Bereich B zu irgendeinem Slave Aᵢ im geschützten Bereich A möglich. Wird aufgrund einer unbefugten Manipulation an den Slaves Bi im ungeschützten Bereich eine Nachricht von außen in das Netzwerk eingespeist, so ist ausgeschlossen, dass diese Nachricht zu irgendeinem Slave Aᵢ im geschützten Bereich gelangt. Diese Slaves Aᵢ sind damit also vor nicht autorisierten Nachrichten geschützt.

### Bezugszeichenliste

- 10: Master
- 12: LIN-Datenbus
- 14: LIN-Transceiver
- 16: LIN-Transceiver
- 18: Datenausgang
- 20: Dateneingang
- 22: serielle Schnittstelle
- 24: Mikrocontroller

- A: geschützter Bereich
- Aᵢ: Slave im geschützten Bereich
- B: ungeschützter Bereich
- Bi: Slave im ungeschützten Bereich
- TxD 1: Dateneingang
- RxD 1: Datenausgang
- TxD2: Dateneingang
- RxD2: Datenausgang

## Patentansprüche

1. Lokales Netzwerk insbesondere für Fahrzeuge, mit wenigstens einem Master (10) und mehreren Slaves (Ai, Bi), die durch den Master (10) über einen Datenbus (12) ansteuerbar sind, wobei zumindest ein Slave (Aᵢ) in einem geschützten Bereich (A), z.B. innerhalb des Fahrzeugs, und zumindest ein Slave (Bᵢ) in einem ungeschützten Bereich (B), z.B. außen am Fahrzeug, angeordnet ist,
**dadurch gekennzeichnet,**
**dass** der Master (10) über zwei Transceiver (14, 16) derart mit den Slaves (Aᵢ, Bᵢ) gekoppelt ist, dass von einem jeweiligen Slave (Bᵢ) im ungeschützten Bereich (B) ausgehende Daten zwar zum Master (10), jedoch nicht zu irgend einem Slave (Aᵢ) im geschützten Bereich (A) übertragbar sind, wobei ein Datenausgang (18) des Masters (10) mit einem Dateneingang (TxD1) des einen, direkt mit dem bzw. den Slaves (Aᵢ) im geschützten Bereich (A) gekoppelten Transceivers (14), ein Datenausgang (RxD1) dieses Transceivers (14) mit einem Dateneingang (TxD2) des anderen, direkt mit dem bzw. den Slaves (Bᵢ) im ungeschützten Bereich (B) gekoppelten Transceivers (16) und ein Datenausgang (RxD2) dieses Transceivers (16) mit einem Dateneingang (20) des Masters (10) verbunden ist, der direkt mit dem bzw. den Slaves (Aᵢ) im geschützten Bereich (A) gekoppelte Transceiver (14) die an seinem betreffenden Dateneingang (TxD1 ) empfangenen, vom Master (10) ausgesendeten Daten an den bzw. die Slaves (Aᵢ) im geschützten Bereich (A) weitergibt, über den betreffenden Datenausgang (RxD1) dieses Transceivers (14) sowohl die vom Master (10) ausgesendeten Daten als auch die Antwortsignale des bzw. der im geschützten Bereich (A) angeordneten Slaves (Aᵢ) an den betreffenden Dateneingang (TxD2) des anderen, direkt mit dem bzw. den Slaves (Bᵢ) im ungeschützten Bereich (B) gekoppelten Transceivers (16) übertragbar sind, der diese Daten an den bzw. die Slaves (Bᵢ) im ungeschützten Bereich (B) weitergibt, und über den betreffenden Datenausgang (RxD2) dieses Transceivers (16) die Antwortsignale sämtlicher Slaves (Aᵢ, Bᵢ) an den betreffenden Dateneingang (20) des Masters (10) übertragbar sind.

2. Lokales Netzwerk nach Anspruch 1,
**dadurch gekennzeichnet,**
**dass** der Master (10) über die beiden Transceiver (14, 16) derart mit den Slaves (Aᵢ, Bᵢ) gekoppelt ist, dass unabhängig davon, ob ein jeweiliger Slave (Aᵢ, Bᵢ) im geschützten oder im ungeschützten Bereich (A bzw. B) angeordnet ist, zwischen dem Slave (Aᵢ, Bᵢ) und dem Master (10) jeweils ein bidirektionaler Datenverkehr möglich ist.

3. Lokales Netzwerk nach Anspruch 1 oder 2,
**dadurch gekennzeichnet,**
**dass** die beiden Transceiver (14, 16) untereinander so verbunden sind, dass von einem jeweiligen Slave (Aᵢ) im geschützten Bereich (A) ausgehende Daten zu irgend einem Slave (Bᵢ) im ungeschützten Bereich (B) übertragbar sind, während ein Datenfluss ausgehend von einem jeweiligen Slave (Bᵢ) im ungeschützten Bereich (B) zu irgendeinem Slave (Aᵢ) im geschützten Bereich (A) ausgeschlossen ist.

4. Lokales Netzwerk nach einem der vorhergehenden Ansprüche,
**dadurch gekennzeichnet,**
**dass** die beiden Transceiver (14, 16) über nur eine serielle Schnittstelle (22) mit dem Master (10) verbunden sind.

5. Lokales Netzwerk nach Anspruch 5,
**dadurch gekennzeichnet,**
**dass** der Master (10) wenigstens einen Mikrocontroller (24) umfasst und die serielle Schnittstelle dem Mikrocontroller (24) zugeordnet ist.

6. Lokales Netzwerk nach einem der vorhergehenden Ansprüche,
**dadurch gekennzeichnet,**
**dass** der Datenbus (12) ein Eindraht-Bussystem umfasst.

7. Lokales Netzwerk nach einem der vorhergehenden Ansprüche,
**dadurch gekennzeichnet,**
**dass** als Datenbus (18) ein LIN (Local Interconnect Network)-Datenbus vorgesehen ist.

8. Lokales Netzwerk nach Anspruch 8,
**dadurch gekennzeichnet,**
**dass** die beiden Transceiver (14, 16) als LIN-Transceiver ausgeführt sind.

## Claims

1. Local network in particular for vehicles, having at least one master (10) and several slaves (Aᵢ, Bᵢ) which can be controlled by the master (10) via a data bus (12), at least one slave (Aᵢ) being arranged in a protected region (A), e.g. inside the vehicle, and at least one slave (Bᵢ) being arranged in an unprotected region (B), e.g. on the outside of the vehicle, **characterised in that** the master (10) is coupled to the slaves (Aᵢ, Bᵢ) by two transceivers (14, 16) in such a way that data proceeding from a respective slave (Bᵢ) in the unprotected region (B) can be transmitted to the master (10), but not to any slave (Aᵢ) in the protected region (A), a data output (18) of the master (10) being connected to a data input (TxD1) of one transceiver (14) coupled directly to the slave or slaves (Aᵢ) in the protected region (A), a data output (RxD1) of this transceiver (14) being connected to a data input (TxD2) of the other transceiver (16) coupled directly to the slave or slaves (Bᵢ) in the unprotected region (B), and a data output (RxD2) of this transceiver (16) being connected to a data input (20) of the master (10), the transceiver (14) which is directly coupled to the slave or slaves (Aᵢ) in the protected region (A) passing on the data received at its respective data input (TxD1) and emitted by the master (10) to the slave or slaves (Aᵢ) in the protected region (A), via the respective data output (RxD1) of this transceiver (14) both the data emitted by the master (10) and the reply signals of the slave or slaves (Aᵢ) arranged in the protected region (A) being transmissible to the respective data input (TxD2) of the other transceiver (16) which is directly coupled to the slave or slaves (Bᵢ) in the unprotected region (B) and which passes on these data to the slave or slaves (Bᵢ) in the unprotected region (B), and via the respective data output (RxD2) of this transceiver (16) the reply signals of all slaves (Aᵢ, Bᵢ) being transmissible to the respective data input (20) of the master (10).

2. Local network according to claim 1, **characterised in that** the master (10) is coupled to the slaves (Aᵢ, Bᵢ) by the two transceivers (14, 16) in such a way that, regardless of whether a respective slave (Aᵢ, Bᵢ) is arranged in the protected or unprotected region (A or B), in each case bidirectional data communications are possible between the slave (Aᵢ, Bᵢ) and the master (10).

3. Local network according to claim 1 or 2, **characterised in that** the two transceivers (14, 16) are connected to each other in such a way that data proceeding from a respective slave (Aᵢ) in the protected region (A) are transmissible to any slave (Bᵢ) in the unprotected region (B), while the possibility of data flow proceeding from a respective slave (Bᵢ) in the unprotected region (B) to any slave (Aᵢ) in the protected region (A) is excluded.

4. Local network according to any of the preceding claims, **characterised in that** the two transceivers (14, 16) are connected to the master (10) by only one serial interface (22).

5. Local network according to claim 5, **characterised in that** the master (10) includes at least one microcontroller (24) and the serial interface is associated with the microcontroller (24).

6. Local network according to any of the preceding claims, **characterised in that** the data bus (12) includes a single-wire bus system.

7. Local network according to any of the preceding claims, **characterised in that** a LIN (local interconnect network) data bus is provided as the data bus (18).

8. Local network according to claim 8, **characterised in that** the two transceivers (14, 16) are designed as LIN transceivers.

## Revendications

1. Réseau local, en particulier pour véhicule, comprenant au moins un maître (10) et plusieurs esclaves (Ai, Bi), qui peuvent être pilotés par le maître (10) via un bus de données (12), dans lequel au moins un esclave (Ai) est agencé dans une zone protégée (A), par exemple à l'intérieur du véhicule, et au moins un esclave (Bi) est agencé dans une zone non protégée (B), par exemple à l'extérieur sur le véhicule,
**caractérisée en ce que**
le maître (10) est couplé via deux émetteurs-récepteurs (14,16) avec les esclaves (Ai, Bi) de telle façon que des données qui proviennent d'un esclave respectif (Bi) dans la zone non protégée (B) sont transmissibles certes vers le maître (10), mais non pas vers un quelconque esclave (Ai) dans la zone protégée (A), dans lequel une sortie de données (18) du maître (10) est reliée à une entrée de données (TxD1) de l'un des émetteurs-récepteurs (14) couplée directement à l'esclave ou aux esclaves (Ai) dans la zone protégée (A), une sortie de données (Rx D1) de cet émetteur-récepteur (14) est reliée à une entrée de données (TxD2) de l'autre émetteur-récepteur (16) couplée directement à l'esclave ou aux esclaves (Bi) dans la zone non protégée (B), et une sortie de données (RxD2) de cet émetteur-récepteur (16) est reliée à une entrée de données (20) de l'appareil maître (10), lequel retransmet directement avec l'émetteur-récepteur (14) couplé directement à l'esclave ou aux esclaves (Ai) dans la zone protégée (A) les données émises par le maître (10) et reçues à son entrée de données concernée (TxD1) vers le ou les esclaves (Ai) dans la zone protégée (A), de sorte que via la sortie de données concernée (RxD1) de cet émetteur-récepteur (14), aussi bien les données émises depuis le maître (10) que les signaux de réponse de l'esclave ou des esclaves (Ai) agencés dans la zone protégée (A) sont transmissibles à l'entrée de données concernées (TxD2) de l'autre émetteur-récepteur (16) couplé à l'esclave ou aux esclaves (Bi) dans la zone non protégée (B), cet autre émetteur-récepteur transmettant ces données à l'esclave ou aux esclaves (Bi) dans la zone non protégée et, via la sortie de données concernée (RxD2) de cet émetteur-récepteur (16), les signaux de réponse de la totalité des esclaves (Ai, B eti) sont transmissibles à l'entrée de données concernées (20) du maître (10).

2. Réseau local selon la revendication 1,
**caractérisé en ce que** le maître (10) est couplé via les deux émetteurs-récepteurs (14, 16) avec les esclaves (Ai, Bi) de telle manière que, indépendamment de savoir si un esclave respectif (Ai, Bi) est agencé dans une zone protégée ou une zone non protégée (A ou B), entre l'esclave (Ai, Bi) et le maître (10) une circulation des données bidirectionnelle est à chaque fois possible.

3. Réseau local selon la revendication 1 ou 2,
**caractérisé en ce que** les deux émetteurs-récepteurs (14,16) sont reliés l'un à l'autre de telle façon que des données partant d'un esclave respectif (Ai) dans la zone protégée (A) peuvent être transmises à un esclave quelconque (Bi) dans la plage non protégée, alors qu'un flux de données partant d'un esclave respectif (Bi) dans la zone non protégée (B) vers un esclave quelconque (Ai) dans la zone protégée (A) est exclu.

4. Réseau local selon l'une des revendications précédentes,
**caractérisé en ce que** les deux émetteurs-récepteurs (14, 16) sont reliés au maître (10) via seulement une interface série (22).

5. Réseau local selon la revendication 5, **caractérisé en ce que** le maître (10) comprend au moins un microcontrôleur (24), et l'interface série est associée au microcontrôleur (24).

6. Réseau local selon l'une des revendications précédentes, **caractérisé en ce que** le bus de données (12) est un système de bus monofilaire.

7. Réseau local selon l'une des revendications précédentes, **caractérisé en ce que** l'on prévoit comme bus de données (18) un bus de données LIN (réseau interconnecté local).

8. Réseau local selon la revendication 7, **caractérisé en ce que** les deux émetteurs-récepteurs (14, 16) sont réalisés à titre d'émetteurs-récepteurs de LIN.
